# EUROPEAN PATENT SPECIFICATION

(11) **EP 3 114 523 B1**
(45) Date of publication and mention of the grant of the patent: **12.06.2024**
(21) Application number: 15709311.3
(22) Date of filing: 04.03.2015
(51) Int. Cl.: G02B 21/34

(54) **MICROSCOPE SLIDE**
OBJEKTTRÄGER FÜR MIKROSKOP
LAME DE MICROSCOPE

(30) Priority: 04.03.2014 GB 201403822
(43) Date of publication of application: 11.01.2017
(73) Proprietor: Calamat Ltd, Stockport SK7 5AA (GB)
(72) Inventor: MANGHAM, Charles, Stockport SK7 5AA (GB); MANGHAM, Annatina Cannon, Stockport SK7 5AA (GB)
(74) Representative: West, Heather Carol
(86) International application number: PCT/GB2015/050617
(87) International publication number: WO 2015/132583

(56) References cited:
- GB-A- 1 235 587
- US-A- 2 090 914
- US-A- 2 942 520
- US-A- 3 065 669
- US-A- 3 656 833
- US-A- 3 745 091
- US-A- 4 011 350
- US-A- 4 441 793

## Description

The invention relates to microscope slides, in particular microscope slides for histological or cytological use, for example with a non-inverted, bright field optical microscope, comprising a histological or cytological sample in contact with an optically transparent coverslip or base, wherein the optical microscope can be used to study the sample through the optically transparent coverslip or base.

Microscope slides for holding specimens, such as tissue samples, have been available for over two hundred years.

Typically microscope slides are a thin flat piece of glass, typically 75 x 25 mm and approximately 1mm thick, used to hold objects for examination under the optical microscope.

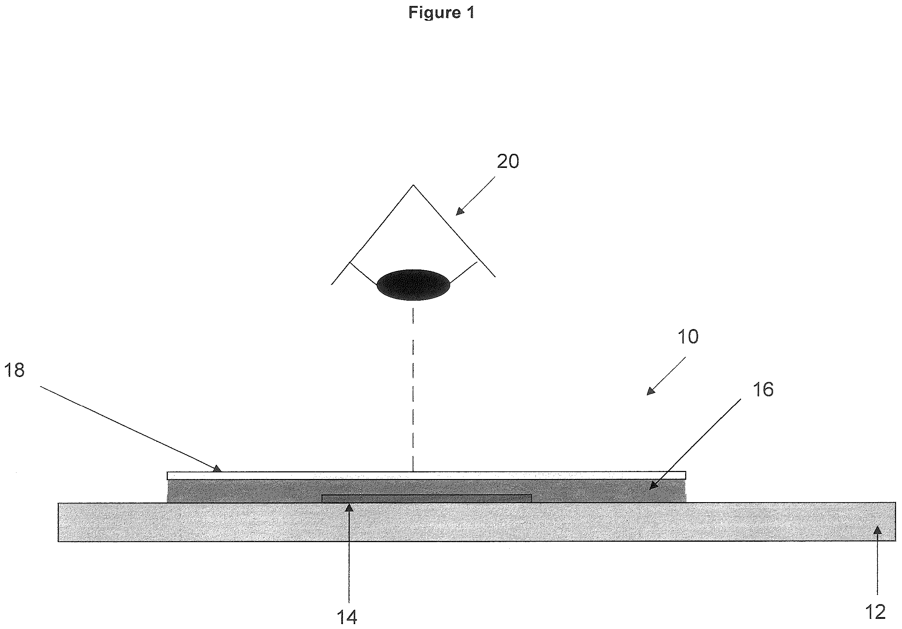

Figure 1 shows a typical prior art use of a microscope slide. A tissue section or cytological specimen (14) is placed on the microscope slide (12). The coverslip mountant (16) is then typically placed over the tissue section (14) and then a thin glass or plastic coverslip (18) is placed over the coverslip mountant (16). The tissue section or cytological specimen is then viewed from above through an objective lens (20) mounted on the microscope. Accordingly, the user of the microscope has to look through both the coverslip (18) and also coverslip mountant (16) in order to view the tissue section or cytological specimen (14). Manufacturers spend a considerable amount of effort trying to ensure that the coverslip mountant has similar optical properties (in particular, a similar refractive index and translucency) to the glass or plastic coverslip. The aim of this is to reduce the amount of blurring of the image of the tissue section or cytological specimen. Moreover, they often require the microscope slide mountant to be dried for several hours in order to allow solvent contained within the mountant to evaporate and to leave optically transparent mounting polymer material behind. This leads to delays in being able to obtain optimally clear images of the tissue section. It is particularly important where freshly prepared microscope slides of frozen tissue sections are viewed under the microscope, for example, where a sample of tissue has been taken from a subject during surgery, and it is important for a histopathologist to view the tissue sample during the surgical procedure to ensure, for example, that the tissue is not malignant or that the correct tissue has been removed from the patient during surgery.

The inventor has realised that removing the need to view the tissue sample through the coverslip mountant would improve the resolution of the image obtained. It would also remove the need to wait long periods of time whilst the coverslip mountant solvent evaporates and the mountant polymer sets.

Accordingly one part of the invention therefore provides a non-inverted optical microscope comprising a stage and above the stage an objective lens, comprising a microscope slide as defined in claim 1.

Typically the tissue sample is a tissue section (i.e. "slice") cut on a microtome, for example, a fresh tissue section or indeed, a tissue slice mounted in, for example, paraffin wax, or a cytological smear, such as a smear from a cervical examination, or a cytospin cytological sample. Cystospin samples are typically taken from, for example, sputum or by a fine needle aspirate, and cells spun down by a centrifuge onto the attenuated/thinned coverslip or base. The tissue section is typically between 2 and 7 µm thick. The tissue or cytological sample may or may not be *in vitro* tissue cultured cells. The tissue section or cytological sample is typically biological, e.g. animal or plant tissue and may be a medical or veterinarian biopsy or resection tissue sample.

Typically no coverslip mounting fluid is used in any aspects of the invention, although the same solvent and chemical polymers that are used for coverslip mounting may be used as a sealant.

The coverslip is 0.05-0.25mm thick, more preferably 0.1-0.2mm thick.

Non-inverted optical microscopes such as bright field microscopes are generally known in the art.

They typically contain one or more lenses producing an enlarged image of a sample placed in the focal plane. Typically the sample is placed on a stage. The stage or indeed a body containing the lenses may be moved by the user in order to focus the image of the sample.

The sample is typically illuminated from below by light focused through the stage and therefore through the sample towards the objective lenses of the microscope, through the use of, for example, an electrical light source above or below the sample that is placed on the stage.

Attempts have been made previously to try and overcome some of the problems associated with focusing on samples:
GB 1,235,587 describes a microscope slide and dark field microscope arrangement. The slides have a substantially flat elongated body having a lower surface and an upper surface spaced from the lower surface. A recess is provided in the lower surface for a transparent cover plate which provides a support for a specimen to be examined. The system attaches a sample to the underside of the coverslip and uses an immersion fluid between the sub stage lens on the microscope and the sample. The immersion fluid is substantially the same refractive index as the lens and is held in place by a passage in the stage assembly. This means that there is a risk of cross contamination between different samples used on the microscope and also risks the presence of bubbles between the sub stage lens assembly and the sample resulting in irregular lighting of the sample. Further prior art can be found in US 2 942 520 A or US 3 065 669 A.

The inventor realised that viewing a sample directly through a coverslip or base, instead of via a mountant, improves the ability to study the sample.

The invention defined in claim 1.

By having a substantially flat body, it removes the need to have a recess machined into the microscope slide for the coverslip to slot into. In one version of GB 1,235,587, the coverslip needs to be machined and placed within a recess in order to allow the microscope slide to sit properly on the stage of the microscope. By having the microscope slide of the invention being capable of being turned over, this allows the first surface of the body to sit on the stage of the microscope as a conventional microscope slide would.

The specimen is typically providing contact with the surface of the coverslip. The specimen is typically a sample of tissue for histological or cytological examination as defined above.

An alternative construction not within the scope of the claims for use a microscope slide comprising a body having a first sample receiving surface spaced from a second surface, the sample receiving surface being attenuated or defining a single well, the attenuated surface or single well having a flat optically transparent base and a second substantially flat viewing surface. That is, for example, the microscope slide can simply have a well or attenuated surface machined or moulded into the slide. The sample is therefore placed within the well and the microscope slide is inverted so that the sample is viewed through the viewing surface and the base of the slide directly to the sample placed on the base. Accordingly, typically the attenuated surface or single well has a sample of tissue for histological or cytological examination in contact with the base. The viewing surface of the slide may be substantially flat across the surface of the slide, or alternatively may itself comprise a depression to allow the objective lens of the microscope to sit within the depression to allow the tissue sample to be viewed through the base.

The viewing surface closest to the objective lens, may be the first surface.

Typically the sample of tissue is as defined above.

A further aspect of the invention provides a microscope slide, the microscope slide having a first surface spaced from a second surface, the first surface being attenuated or defining a single well having a flat optically transparent base and a second surface, the second surface having mounted in contact therewith a histological or cytological sample, wherein the tissue or cytological sample is maintained in contact with the second surface by a coverslip mountant layer between the histological or cytological sample and a coverslip.

In this embodiment, the image is viewed through the well.

One of the advantages associated with the slides of the invention is that there is a reduction in chromatic dispersion compared to conventional microscope slides. In conventional microscope slides, light passes through the typically 1mm thick glass base before interacting with the sample and subsequently travelling into the microscope. Light passing through this thick base layer of glass is chromatically dispersed and this reduces the quality of the image. In the claimed invention, a very thin layer (typically less than 100µm) of sealant replaces this 1mm glass layer, reducing the distance light has to travel in the medium before reaching the sample thereby reducing the degree of chromatic dispersion.

Typically the microscope slides are sized to allow them to be used with conventional prior art non-inverted optical microscopes such as bright field microscopes. Typically the microscope slides are elongated and substantially flat. Typical microscope slides are 75x25 mm and typically 1 mm to 1.2 mm thick.

The body of the microscope slide surrounding the optically transparent attenuated surface or aperture or well may be made of an optically transparent material, an optically partially transparent material or an optically non-transparent material. Accordingly the slide may be made of, for example, glass, plastics or metal. The material may be a thermoset resin. Optically transparent thermoset resins are generally known in the art.

The body of the microscope slide may be, for example, magnetic or ferromagnetic. This allows slides to be stored attached to magnetic or ferromagnetic surfaces. Use of a magnetic slide would enable the slide to attach to the microscope stage (usually made of steel) eliminating the need for the usual sprung slide holder/clip on the microscope stage.

There is no particular restriction on the type of metal from which the body of the slide is made. The metal may be an alloy or pure metal and is typically selected from steel, brass, aluminium or combinations thereof, most typically, the metal is aluminium.

Manufacturing the slide body from such materials allows the slides to be stamped out of sheet material thereby improving the ease of mass manufacture. Further, making the slide body from metal allows details to be permanently/indelibly imprinted/marked onto the slide. A portion of the microscope slide body can be imprinted with information, such as sample numbers, using various printing techniques, avoiding the use of sticky labels or glass pens which can fall off, be smudged or washed away during use or storage. Typical printing/marking processes include dot matrix stamping or laser engraving or etching.

Typically the optically transparent attenuated surface or base or coverslip is made of glass or plastic. Optically transparent thermoset resins are generally known in the art. Typically the coverslip or base is as defined above.

A single attenuated surface or aperture or well is typically provided per slide.

The attenuated area or single well or aperture will be of a sufficient size to permit the application of a histological or cytological sample and may be offered in a range of sizes to accommodate different sample sizes (e.g. biopsy sample versus larger resection specimen sample).

The attenuated surface, aperture or well may be square, rectangular, round, oval or indeed substantially any shape in the plane of the microscope slide.

The specimen or tissue sample may be protected and/or kept in place by the use of a sealant, such as a rapid setting sealant such as a thermoset epoxy resin or a thermoplastic nail varnish-type polymer. As the tissue sample is not necessarily illuminated through the sealant (i.e. the tissue sample may be illuminated through a transparent coverslip/base/attenuated area, or by using reflected light) it is possible to use non-optically transparent sealants. Where the tissue sample is illuminated through the sealant (as in a standard optical microscope), the sealant will, of necessity, be translucent. The sealant may be, for example, fluorescent or chemiluminescent. The use of a UV lamp, for example, may allow the sealant to fluoresce and illuminate the tissue sample.

The sealant is typically applied to the slide either as a liquid or by spraying as an aerosol. Typically, the application of sealant is done by spraying. This allows a thin film sealant to be applied evenly onto a sample and therefore improves transmission and reduces dispersion of light through the slide so as to yield a better quality image than conventional slides. Typically the thickness of the film will be less than 100µm and typically the film has a thickness in the range 10µm to 100µm, Most typically, the film will have a thickness in the range 20µm to 80µm and more typically still the film has a thickness of about 50µm.

There is no particular restriction on the type of sealant used in the invention however it is preferred that sealant has low viscosity, a similar refractive index to the materials used in the window of the slide (typically glass), dries quickly and is optically clear. Typically the sealant comprises distyrene as this has a refractive index very similar to glass. The sealant typically includes a solvent to facilitate application of the sealant to the slide which can subsequently evaporate leaving behind the other sealant components as a thin film. Other components can also be added to improve the film forming or optical properties of the sealant such as dewetting agents to minimise the formation of a meniscus which can act as a lens, distorting images.

Examples of typical resins include compositions comprising distyrene, a plasticiser and xylene.

The microscope slides of the invention may comprise an indicium on the coverslip (where the coverslip is subsequently applied to the body of the slide by the user and therefore requires identification of the attached tissue specimen or cytological preparation separate from the body of the slide) or the second surface of the body or alternatively or additionally an indicium on the first surface of the body or the coverslip. Indiciums can be used to uniquely or non-uniquely identify the coverslip or the microscope slide to which the coverslip is attached. The indicium may, for example, be a barcode, or other machine-readable code. An example of an indicium on a coverslip is shown in US 2007/0092408. Alternatively, it may be a roughened area to allow the slide or coverslip to be easily written on.

As the microscope slide may at different stages be rotated so that different sides of the slides face the user, it is important to ensure that the tissue or cytological sample attached to the slide is immediately identifiable. Accordingly, typically an indicium is provided on both sides of the microscope slide when in use. Accordingly, the indicium may be provided on one or both sides of the coverslip and/or on the one or both surfaces of the body of the microscope slide. This allows the microscope slide to be inverted and the origin/identity of the tissue sample, to be readily determined from both sides.

The microscope slide may be used in combination with a non-inverted optical microscope such as bright field as discussed above.

The coverslip or base may be coated with, for example, lysine to allow the sample to better adhere.

Methods of preparing a tissue sample for histological or cytological examination are also provided comprising providing an optically transparent attenuated surface or coverslip or base, placing the tissue sample in contact with the surface of the attenuated surface or coverslip or base, inverting the whole microscope slide and placing it on the stage of a non-inverted, bright field optical microscope, the non-inverted, bright field optical microscope comprising a stage, an objective lens, wherein the sample faces the stage and wherein either:
(a) the coverslip is mounted on a second surface of a body, comprising a first surface and a second surface spaced from the first surface, the body defining an aperture through the body, wherein the second surface is substantially flat and the coverslip is mounted on the second surface with the sample within the aperture; or
(b) the base forms part of a sample receiving surface of a microscope slide for histological use comprising a body, said body comprising a viewing surface and a sample receiving surface defining a single well, the single well comprising an optically transparent base.

The tissue may be as defined above.

Tissue samples may be mounted in wax, such as paraffin wax and a section cut using a microtome. Typically this section is floated on a water bath from where the section is placed on the coverslip or base. The tissue section then may be heated, for example, to approximately 65°C to adhere the section to the surface of the base or coverslip. The wax may then be removed using solvents such as xylene and alcohols, prior to staining, as generally known in the art.

Alternatively, tissue samples may be cryomounted using techniques generally known in the art, sliced into sections and placed on the coverslip or base prior to staining. The inventors have found that the claimed invention is particularly useful in electrodeposition. Without being bound by theory, it is thought that the thin window or well base in the claimed invention is capable of storing a greater static charge than conventional glass slides. This is particularly useful when looking at frozen sections as when the slide of the invention is brought near to a sample, the sample jumps into the well or onto the charged window (depending upon which surface of the slide the sample is placed). Restricting the window to a specific portion of the slide body also means that the window acts as a target to consistently guide samples to a particular portion of the slide. This is sometimes a problem when preparing frozen sections with large charged glass slides.

A still further aspect of the invention provides a microscope slide kit comprising a body, the body comprising a first surface and second surface spacer on the first surface the body defining an aperture through the body, and the second surface is substantially flat; and an optically transparent attenuated surface or coverslip or thin base.

A kit additionally comprising one or more of a sample sealant, a stain and/or a coverslip adhesive may also be provided. Typically, the adhesive is a chemically and/or heat resistant material. Typically, the adhesive is a resin that is UV-curable.

The use of the coverslip mountant, with the provision to seal the aperture with a traditional coverslip mountant solution (which, being exposed to the atmosphere without the overlying coverslip as per its traditional use, will dry more quickly) or a fast drying sealant such as an epoxy resin, or indeed a fast-drying clear nail varnish, has the advantage of avoiding sticky slides, which is problematic if they stick to paperwork, slide trays etc. There is no need to wait, for example, 48 hours for traditionally covered slides to dry before they can be filed. They can be filed shortly after viewing by which time the fast-drying, curing epoxy resin or fast drying solvent based polymer sealant has already been applied.

Furthermore, because the sealant is exposed to the air rather than being sandwiched between the glass base and the glass coverslip (as in a traditional microscope slide), there is no formation of bubbles. This also improves the quality of sample images.

Provision of wells allows reagents to be easily used by placing the reagents into the well to contain them. Alternatively, the slide or racked slides can be immersed in pots of histological or cytological staining reagents to stain the tissue section/sample or cytological preparation.

The slides are typically compatible with slide racks, staining machines and existing microscopes and digital microscope scanners. This avoids the need for new laboratory equipment to be provided.

The resultant higher resolution image of the tissue or cytological sample achieved will be of benefit in the interpretation of the sample. The resultant higher resolution image of the tissue or cytological sample will improve the quality of the scanned digital image resulting from the use of a microscope slide digital scanner.

The provision of the sealant and attenuated area or well design avoids the need for an automated coverslipping machine.

The aperture sealant may additionally be adapted, for example, by provision of a reflective, chemiluminescent or chem-uv-luminescent material to improve or modify the background light for the sample.

The microscope slides may also be used with a digital microscope slide scanner instead of an optical microscope. Such scanners produce a digitised image of the microscope slide.

The invention will now be described by way of invention only with reference to the following figures:
**Figure 1** shows a cross section through a conventional microscope slide having a tissue section mounted on it.
**Figure 2** shows a top view of a microscope slide of the invention with a central, rectangular aperture/hole.
**Figure 3** shows an underside view of the microscope slide of the invention with the central, rectangular defect covered by a coverslip.
**Figure 4** shows a cross sectional view through a microscope slide of the invention.
**Figure 5** shows a cross sectional view through a microscope slide of the invention with the addition of a tissue sample directly applied to the coverslip of the microscope slide shown in Figure 4.
**Figure 6** shows the staining of a tissue sample on a microscope slide of the invention.
**Figure 7** shows the cross sectional view of a microscope slide of the invention with a sealant layer applied.
**Figure 8** shows the microscope slide of the invention having been rotated and being viewed through a microscope.
**Figure 9** shows photographs taken through an optical microscope. The left hand side shows a haematoxylin stained tissue section of tonsil, taken through the microscope of a conventional slide of the format shown in Figure 1. The right hand side shows a tissue section cut from the same sample utilising the microscope slide according to the invention. The resolution of the image on the right hand side is superior.
**Figure 10** shows an alternative embodiment of the invention.
**Figure 11** shows a still further embodiment of the invention.
**Figure 12** shows an alternative embodiment of the invention.
Figure 1 shows a conventional slide (10). A slide (10) comprises a microscope slide glass base (12), having a tissue section (14) mounted thereon. The tissue section is covered by a coverslip mountant (16), which attaches the glass or plastic coverslip (18) to the slide.

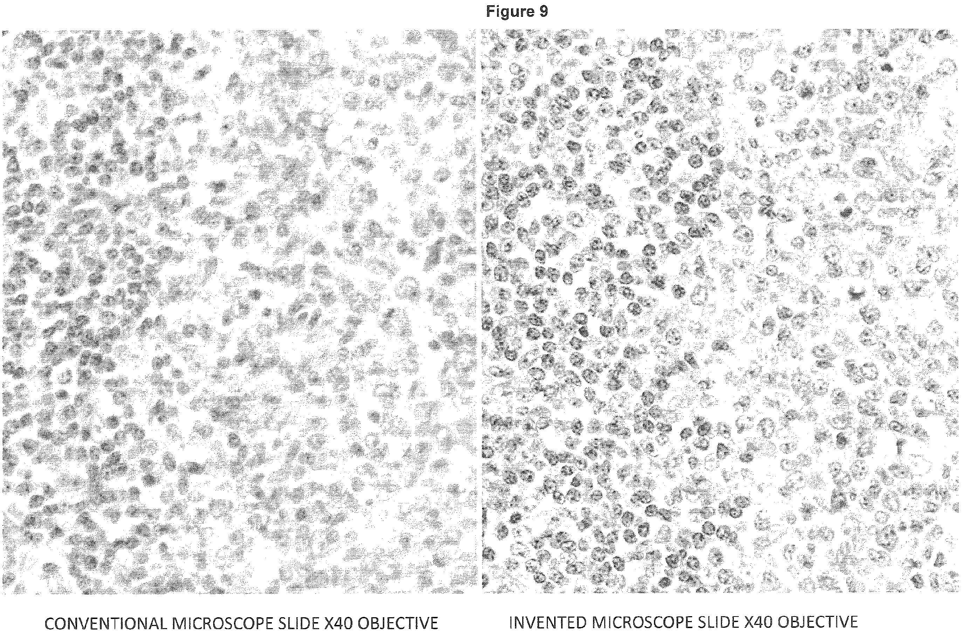

In use, the tissue section is viewed through the microscope lens (20), through the coverslip (18) and the coverslip mountant (16). Typically this produces the blurred/out of focus results shown on the left hand side of Figure 9.

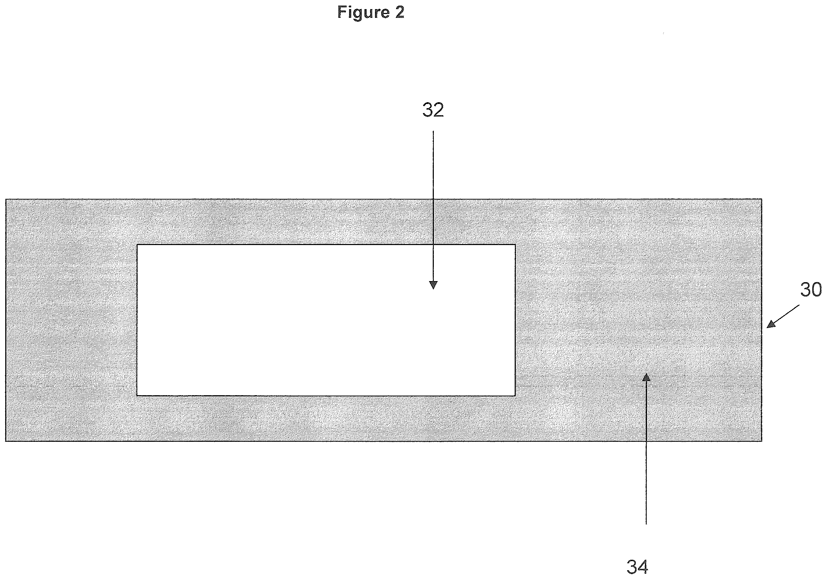

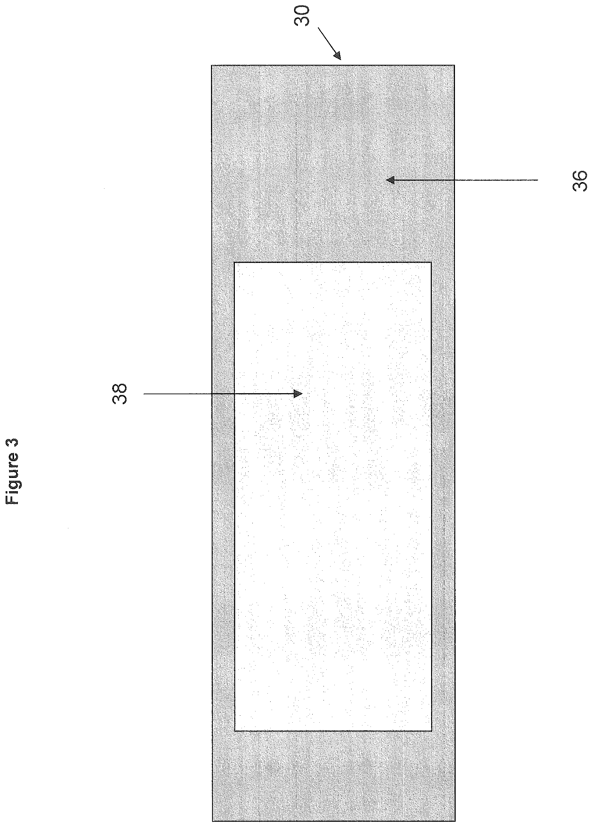

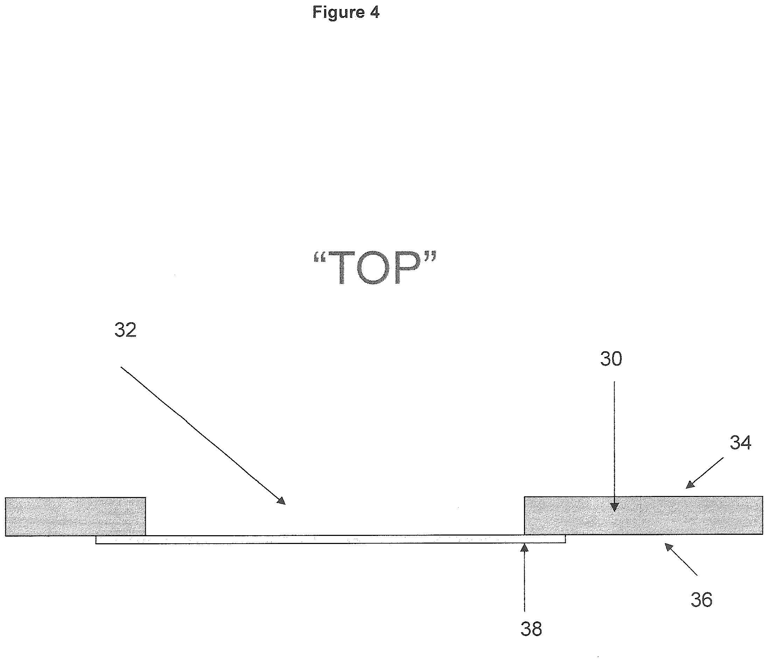

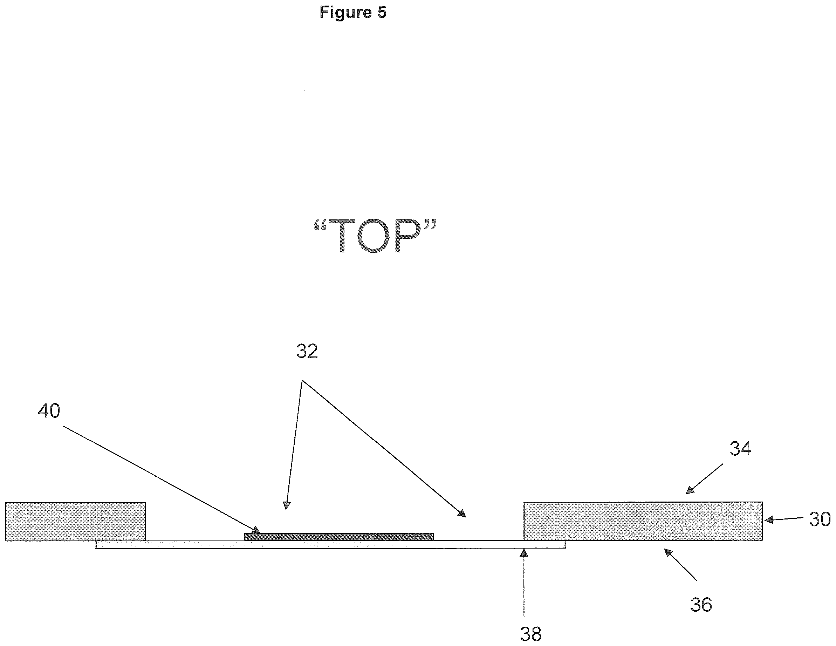

Figures 2-4 show the microscope slide of the invention. The slide comprises a base (30), the base (30) comprises an aperture or hole (32). The base is typically elongated and typically comprises a squared, circular or an elongated aperture. The base may be transparent (e.g. glass or plastic) or non-transparent (e.g. plastic or metal). The aperture may be potentially any shape, as long as it is through the base from the first side (34) to the second side (36). Figure 2 shows the top view looking onto the slide with the aperture. As shown in Figures 3, 4 and 5, a coverslip is provided which covers the aperture (32). The coverslip (38) is sized to extend beyond the edges of the aperture (32). The coverslip may be applied to the second surface (36) prior to use (i.e. as part of the manufacturing process) and the sample of tissue applied directly to the "top side" accessed through the aperture. Alternatively, the coverslip may be separate from the body of the slide and used to pick up a tissue section (40). The tissue section (40) is provided in contact with the coverslip (38). The coverslip may then be attached to the second side (36) of the base (30) using a suitable adhesive (e.g. solvent-resistant adhesive).

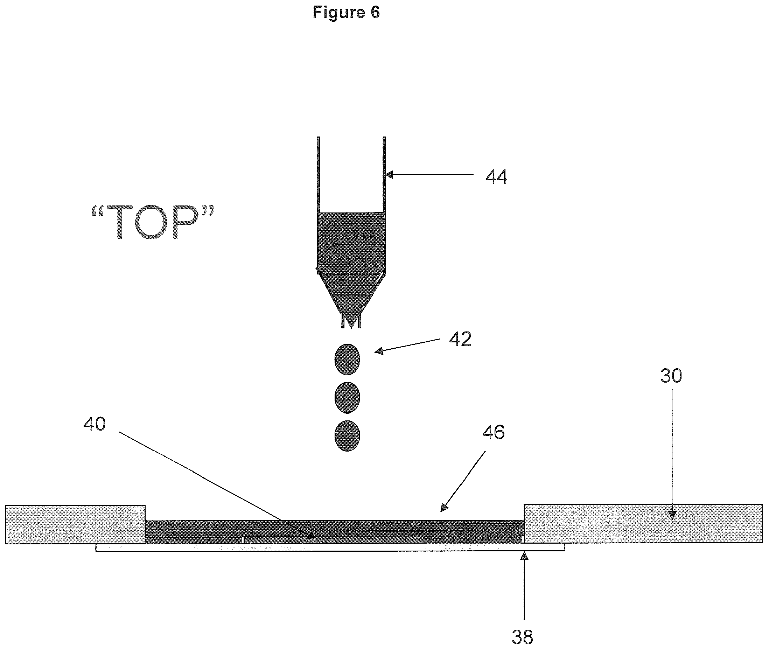

Figure 6 shows that the tissue sample may then be stained using conventional tissue stains such as eosin, haematoxylin, toluidine blue, silver precipitation stains or Romanowsky stains. Stain may be dropped (42) from, for example a pipette (44) onto the tissue section (40) to form a layer of stain (46). Alternatively the slide may be fully or partially immersed in a pot of liquid stain. The stain may be used, for example, to stain nuclei or other features of the tissue material.

The use of stain is optional.

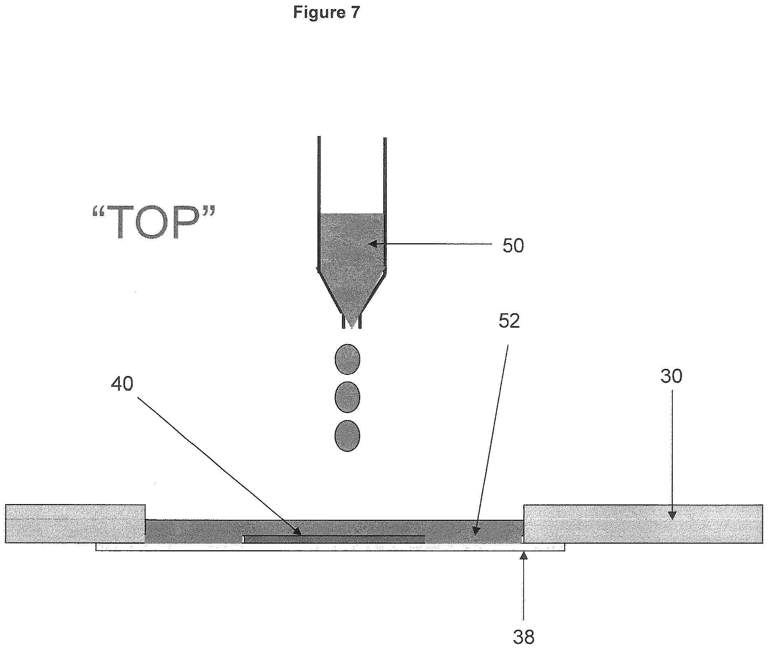

The tissue section may be held in place and protected, for example, with using a sealant, such as an epoxy resin or indeed a film-forming polymer such as nitrocellulose dissolved in butyl acetate or ethyl acetate (i.e. "nail varnish"). In Figure 7, the sealant (50) is applied using a suitable pipette to form a layer (52) that assists in sealing the tissue section in place.

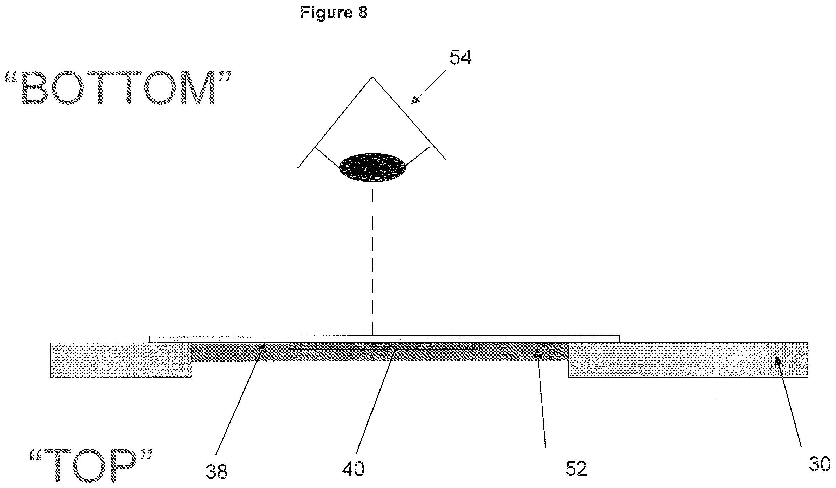

The sealant stage can dry rapidly either by the use of a fast-curing adhesive such as an epoxy resin or the use of a solvent based sealant open to the atmosphere allowing the solvent (e.g. xylene or toluene) to evaporate quickly thus permitting the material to dry quickly. The dried microscope slide comprising the tissue section will then be inverted prior to placing on a microscope. Figure 8 shows the typical arrangement of a microscope slide with the tissue section (40) viewed through the coverslip (38) via a lens (54). Note the difference between figure 8 and figure 1; in figure 1 the tissue section is viewed through coverslip mountant and the coverslip, whereas in figure 8 the tissue section is viewed through the coverslip only.

Figure 9, right hand side, shows the improved image obtained using the microscope slide of the invention with the tissue viewed through the coverslip alone (as in figure 8) versus the lower resolution image on the left where the tissue section is viewed through the traditional (prior art) arrangement (as illustrated in figure 1).

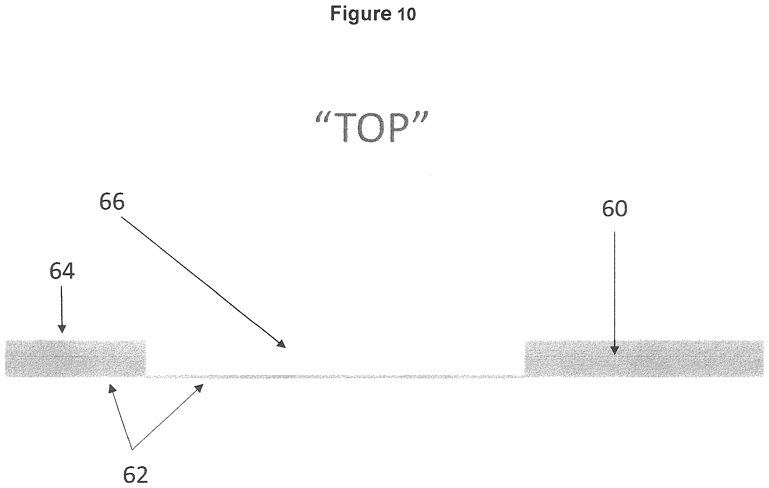

Figure 10 shows an alternative embodiment in which a well (66) is formed by moulding or etching a glass or plastic slide. The glass or plastic slide does not comprise a coverslip. Instead the slide (60) comprises a first surface (64) which is moulded or etched to comprise a single well (66) and a second surface (62) through which the sample maybe viewed. The sample may be placed in the well as described previously for the other embodiments of the invention. That is the sample is placed in contact with the base of the well formed from the first surface (64).

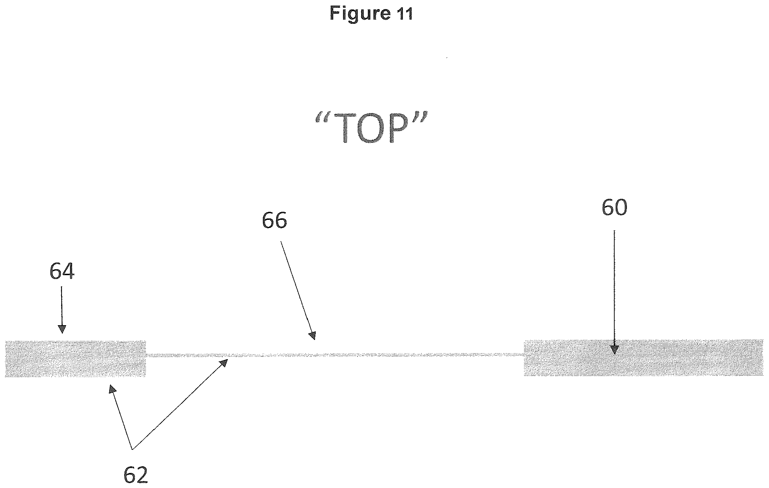

A still further embodiment of the invention is shown in Figure 11 in which each side of "66" forms a well.

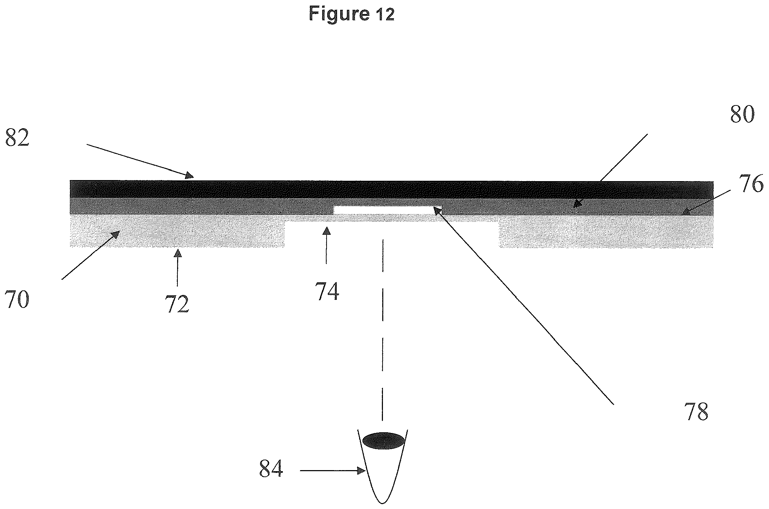

Figure 12 shows a body of a slide (70), the body comprising a first surface (72) defining a well (74). The body comprises a second, substantially flat surface (76) having in contact with a sample of a tissue or cytological sample (78). This is kept in place by a coverslip mountant (80) known in the art, and coverslip (82).

The sample is viewed (84) through the flat optically transparent base of the well (74).

## Claims

1. A microscope slide for histological or cytological use with a non-inverted optical microscope, comprising a substantially flat elongated body (30), said body comprising a first surface (34) and a second surface (36) spaced from the first surface, the body defining an aperture (32) through the body, wherein the second surface is substantially flat and an optically transparent coverslip (38) is mounted on said second surface to cover said aperture, wherein the coverslip has a thickness in the range 0.05 - 0.25mm, and wherein the coverslip has a sample-receiving surface accessible through the aperture and an opposite surface for viewing a specimen.

2. A microscope slide according to claim 1, wherein the body (30) of the microscope slide is made of an optically non-transparent material.

3. A microscope slide according to claim 1, wherein the body (30) of the microscope slide is made of metal.

4. A microscope slide according to claim 1, comprising a stain (46) for staining a specimen (40).

5. A microscope slide according to claim 1, comprising a sealant (52) within said aperture (32) to seal a specimen (40) or tissue sample (40) adjacent or in contact with said surface of the coverslip (38); preferably wherein the sealant is a thermoset plastic such as epoxy resin, or solvent-based thermoplastic.

6. A microscope slide according to any preceding claim, comprising an indicium on the coverslip or the second surface; and/or comprising an indicium on the first surface or the coverslip.

7. A non-inverted optical microscope, preferably a bright field microscope, comprising a stage and above the stage an objective lens (54), wherein the stage supports a microscope slide according to any of claims 1-6, with an optically transparent coverslip (38), having a surface facing the objective lens and a surface facing the stage, the surface facing the stage having in contact therewith a sample (40) of tissue for histological examination; preferably wherein the sample is a tissue section, a cytological smear or cytospin sample.

8. A microscope according to claim 7, wherein the coverslip (38) is an integral part of a microscope slide as defined in claims 1 to 6.

9. A method of preparing a tissue sample (40) for histological or cytological examination, with the microscope slide according to any of claims 1-6, comprising providing an optically transparent coverslip (38) having a thickness in the range 0.05 - 0.25mm, putting the tissue sample in contact with a surface of the coverslip, inverting the coverslip and placing the inverted coverslip on a non-inverted optical microscope, preferably a bright field microscope, comprising a stage and objective lens (54), wherein the sample faces the stage and wherein the coverslip is mounted on a second surface (36) of a body (30), the body comprising a first surface (34) and the second surface spaced from the first surface, the body defining an aperture (32) through the body, wherein the second surface of the body is substantially flat and the coverslip is mounted on the second surface of the body with the sample within the aperture.

10. A method according to claim 9, wherein the coverslip (38) or slide comprises an indicium on the coverslip (38) or second surface (36).

11. A method according to claim 10, wherein the slide comprises an indicium on the first surface (34).

12. A method according to claims 9 to 11 comprising staining the sample of tissue (40).

13. A method according to claims 9 to 12, comprising applying a sealant (52) to substantially seal and protect the tissue sample (40) in the aperture (32).

14. A microscope slide kit comprising a microscope slide according to any of claims 1-6.

15. A microscope slide kit according to claim 14, wherein:
(i) the kit additionally comprises one or more of a sample sealant (52), a stain (46) and a coverslip adhesive; and/or
(ii) (a) the coverslip or first surface and (b) the second surface can comprise an indicium.

## Patentansprüche

1. Objektträger für Mikroskop für eine histologische oder zytologische Verwendung mit einem nicht-inversen Lichtmikroskop, der einen im Wesentlichen flachen länglichen Körper (30) aufweist, wobei dieser Körper eine erste Oberfläche (34) und eine von der ersten Oberfläche beabstandete zweite Oberfläche (36) aufweist, wobei der Körper eine Öffnung (32) durch den Körper definiert, wobei die zweite Oberfläche im Wesentlichen flach ist und ein optisch transparentes Deckglas (38) auf der zweiten Oberfläche montiert ist, um die Öffnung zu bedecken, wobei das Deckglas eine Dicke im Bereich von 0,05 - 0,25 mm hat, und wobei das Deckglas eine Probenaufnahmeoberfläche, die durch die Öffnung zugänglich ist, und eine entgegengesetzte Oberfläche zum Betrachten einer Probe hat.

2. Objektträger für Mikroskop nach Anspruch 1, wobei der Körper (30) des Objektträgers für ein Mikroskop aus einem optisch nicht transparenten Material hergestellt ist.

3. Objektträger für Mikroskop nach Anspruch 1, wobei der Körper (30) des Objektträgers für ein Mikroskop aus Metall hergestellt ist.

4. Obj ektträger für Mikroskop nach Anspruch 1, der ein Anfärbemittel (46) zum Anfärben einer Probe (40) aufweist.

5. Objektträger nach Anspruch 1, der ein Dichtungsmittel (52) innerhalb der Öffnung (32) aufweist, um ein Muster (40) oder eine Gewebeprobe (40) benachbart zu oder in Kontakt mit der Oberfläche des Deckglases (38) abzudichten; wobei das Dichtungsmittel vorzugsweise ein wärmehärtender Kunststoff, wie etwa Epoxidharz, oder ein lösungsmittelbasierter Thermoplast ist.

6. Objektträger nach einem der vorhergehenden Ansprüche, der eine Markierung auf dem Deckglas oder der zweiten Oberfläche aufweist; und/oder eine Markierung auf der ersten Oberfläche oder dem Deckglas aufweist.

7. Nicht-inverses Lichtmikroskop, vorzugsweise ein Hellfeld-Mikroskop, das einen Objekttisch und oberhalb des Objekttisches eine Objektivlinse (54) aufweist, wobei der Objekttisch einen Objektträger für ein Mikroskop nach einem der Ansprüche 1 - 6 mit einem optisch transparenten Deckglas (38) mit einer Oberfläche, die der Objektivlinse zugewandt ist, und einer Oberfläche, die dem Objekttisch zugewandt ist, trägt, wobei die Oberfläche, die dem Objekttisch zugewandt ist, eine Gewebeprobe (40) für eine histologische Untersuchung kontaktiert; wobei die Probe vorzugsweise ein Gewebeschnitt, ein zytologische Abstrich oder eine Zytospin-Probe ist.

8. Mikroskop nach Anspruch 7, wobei das Deckglas (38) ein integraler Teil eines Objektträgers für ein Mikroskop, wie in den Ansprüchen 1 bis 6 definiert, ist.

9. Verfahren zur Vorbereitung einer Gewebeprobe (40) für eine histologische oder zytologische Untersuchung mit einem Objektträger für ein Mikroskop nach einem der Ansprüche 1 - 6, das aufweist:
Bereitstellen eines optisch transparenten Deckglases (38) mit einer Dicke im Bereich von 0,05 - 0,25 mm, In-Kontakt-Bringen der Gewebeprobe mit einer Oberfläche des Deckglases; Invertieren des Deckglases und Anordnen des invertierten Deckglases auf einem nicht-inversen Lichtmikroskop, vorzugsweise einem Hellfeld-Mikroskop, das einen Objekttisch und eine Objektivlinse (54) aufweist, wobei die Probe dem Objekttisch zugewandt ist, und wobei das Deckglas auf einer zweiten Oberfläche (36) des Körpers (30) montiert wird, wobei der Körper eine erste Oberfläche (34) und die von der ersten Oberfläche beabstandete zweite Oberfläche aufweist, wobei der Körper eine Öffnung (32) durch den Körper definiert, wobei die zweite Oberfläche des Körpers im Wesentlichen flach ist und das Deckglas auf der zweiten Oberfläche des Körpers mit der Probe innerhalb der Öffnung montiert wird.

10. Verfahren nach Anspruch 9, wobei das Deckglas oder der Objektträger eine Markierung auf dem Deckglas (38) oder der zweiten Oberfläche (36) aufweist.

11. Verfahren nach Anspruch 10, wobei der Objektträger eine Markierung auf der ersten Oberfläche (34) aufweist.

12. Verfahren nach den Ansprüchen 9 bis 11, welches das Anfärben der Gewebeprobe (40) aufweist.

13. Verfahren nach den Ansprüchen 9 bis 12, welches das Aufbringen eines Dichtungsmittels (52) aufweist, um die Gewebeprobe (40) in der Öffnung (32) im Wesentlichen abzudichten und zu schützen.

14. Objektträgerausrüstung für Mikroskop, die einen Objektträger für ein Mikroskop nach einem der Ansprüche 1 - 6 aufweist.

15. Objektträgerausrüstung für Mikroskop nach Anspruch 14, wobei:
(i) die Ausrüstung zusätzlich ein Probendichtungsmittel (52) und/oder ein Anfärbemittel (46) und/oder einen Deckglas-Klebstoff aufweist; und/oder
(ii) (a) das Deckglas oder die erste Oberfläche und (b) die zweite Oberfläche eine Markierung aufweisen können.

## Revendications

1. Lame de microscope pour une utilisation histologique ou cytologique avec un microscope optique non inversé, comprenant un corps allongé sensiblement plat (30), ledit corps comprenant une première surface (34) et une deuxième surface (36) espacée de la première surface, le corps définissant une ouverture (32) à travers le corps, dans laquelle la deuxième surface est sensiblement plate et une lamelle optiquement transparente (38) est montée sur ladite deuxième surface pour recouvrir ladite ouverture, dans lequel la lamelle a une épaisseur dans la plage de 0,05 à 0,25 mm, et dans lequel la lamelle a une surface de réception d'échantillon accessible à travers l'ouverture et une surface opposée pour visualiser un spécimen.

2. Lame de microscope selon la revendication 1, dans laquelle le corps (30) de la lame de microscope est en un matériau optiquement non transparent.

3. Lame de microscope selon la revendication 1, dans laquelle le corps (30) de la lame de microscope est en métal.

4. Lame de microscope selon la revendication 1, comprenant un colorant (46) pour colorer un spécimen (40).

5. Lame de microscope selon la revendication 1, comprenant un agent de scellement (52) à l'intérieur de ladite ouverture (32) pour sceller un spécimen (40) ou un échantillon de tissu (40) adjacent ou en contact avec ladite surface de la lamelle (38); de préférence dans laquelle l'agent de scellement est un plastique thermodurci tel qu'une résine époxy ou un thermoplastique à base de solvant.

6. Lame de microscope selon l'une quelconque des revendications précédentes, comprenant une marque sur la lamelle ou sur la deuxième surface; et/ou comprenant une marque sur la première surface ou la lamelle.

7. Microscope optique non inversé, de préférence microscope à champ clair, comprenant une platine et au-dessus de la platine une lentille d'objectif (54), dans lequel la platine supporte une lame de microscope selon l'une quelconque des revendications 1 à 6, avec une lamelle optiquement transparente (38), ayant une surface faisant face à la lentille d'objectif et une surface faisant face à la platine, la surface faisant face à la platine ayant en contact avec elle un échantillon (40) de tissu pour l'examen histologique; de préférence, dans lequel l'échantillon est une coupe de tissu, un frottis cytologique ou un échantillon de cytocentrifugation.

8. Microscope selon la revendication 7, dans lequel la lamelle (38) fait partie intégrante d'une lame de microscope telle que définie dans les revendications 1 à 6.

9. Procédé de préparation d'un échantillon de tissu (40) pour un examen histologique ou cytologique, avec la lame de microscope selon l'une quelconque des revendications 1 à 6, comprenant la fourniture d'une lamelle optiquement transparente (38) ayant une épaisseur dans la plage de 0,05 et 0,25 mm, la mise en contact de l'échantillon de tissu avec une surface de la lamelle, l'inversion de la lamelle et la mise en place de la lamelle inversée sur un microscope optique non inversé, de préférence un microscope à champ clair, comprenant une platine et une lentille d'objectif (54), dans lequel l'échantillon fait face à la platine et dans lequel la lamelle est montée sur une deuxième surface (36) d'un corps (30), le corps comprenant une première surface (34) et la deuxième surface espacée de la première surface, le corps définissant une ouverture (32) à travers le corps, dans lequel la deuxième surface du corps est sensiblement plate et la lamelle est montée sur la deuxième surface du corps avec l'échantillon à l'intérieur de l'ouverture.

10. Procédé selon la revendication 9, dans lequel la lamelle (38) ou la lame comprend une marque sur la lamelle (38) ou la deuxième surface (36).

11. Procédé selon la revendication 10, dans lequel la lame comprend une marque sur la première surface (34).

12. Procédé selon les revendications 9 à 11 comprenant la coloration de l'échantillon de tissu (40).

13. Procédé selon les revendications 9 à 12, comprenant l'application d'un agent de scellement (52) pour sceller et protéger sensiblement l'échantillon de tissu (40) dans l'ouverture (32).

14. Kit de lame de microscope comprenant une lame de microscope selon l'une quelconque des revendications 1 à 6.

15. Kit de lame de microscope selon la revendication 14 dans lequel:
(i) le kit comprend en outre un ou plusieurs d'un agent de scellement d'échantillon (52), d'un colorant (46) et d'un adhésif pour lamelle; et/ou
(ii) (a) la lamelle ou la première surface et (b) la deuxième surface peuvent comprendre une marque.
